# EUROPEAN PATENT SPECIFICATION

(11) **EP 2 138 464 B1**
(45) Date of publication and mention of the grant of the patent: **14.08.2013**
(21) Application number: 09162956.8
(22) Date of filing: 17.06.2009
(51) Int. Cl.: C02F 3/12, C02F 3/22, C02F 11/06, C02F 11/12

(54) **Unit for integrated waste water biological treatment**
Einheit für die integrierte biologische Abwasserbehandlung
Unité pour le traitement biologique intégré d'eaux usées

(30) Priority: 26.06.2008 RU 2008125987
(43) Date of publication of application: 30.12.2009
(73) Proprietor: Dremov, Oleg Vladimirovich, 143985 Moskovskaya obl. (RU); Bushev, Dmitry Stanislavovich, 125475 Moscow (RU)
(72) Inventor: Dremov, Oleg Vladimirovich, 143985 Moskovskaya obl. (RU); Bushev, Dmitry Stanislavovich, 125475 Moscow (RU)
(74) Representative: Isarpatent

(56) References cited:
- RU-C1- 2 033 974
- RU-C1- 2 201 405
- RU-C1- 2 228 915
- US-A- 3 713 543
- US-A- 5 630 936
- US-A- 5 888 394
- US-A- 6 120 687

## Description

This invention relates to units combining biological treatment with the small-bubble aeration (air artificial supply) process for oxidizing waste water components. It is intended for integrated waste water biological treatment.

A unit for waste water treatment by a biological process is known from RU2162062 which comprises an equalizing tank with waste water supply and a raw water conduit for supplying it from the equalizing tank to an activation tank including an air supply and a tap to a secondary settling tank, the tap being provided with a sludge removal conduit for air-lifting sludge from the secondary settling tank to the activation tank, and a discharge opening, wherein a float switch for minimum and work levels of waste water is arranged in the activation tank and is intended for terminating the activation process and switching on the conduit for removing sludge from the activation tank to the equalizing tank or switching off the sludge removal conduit and resuming the activation process when the waste water work level is achieved in the equalizing tank.

Disadvantages of this unit include low productivity and insufficient quality of treatment.

Patent RU2228915 discloses an apparatus for household waste water purification. It comprises a housing, a leveling tank with active sludge, a gauge to measure the water level, an aerator, a pump for pumping slit over, a pump for pumping a raw water into an biological activation tank with an aerator, a settler with a large-bubbled aerator and an U-shaped conduit, an aeration chamber, a chamber of slit with a damper, a storm water tank, and a control unit.

Patent RU2201405 discloses an apparatus for cleaning domestic waste water. It contains equalizing reservoir filled with activated sludge, pumps for delivery of water to a settler and for sludge transfer, housing with cover for arrangement of equalizing and activation reservoirs which are provided with level sensors, an aeration chamber with porous filter and activated sludge stabilization chamber. A dampening baffle and a lip are located above the aerator of the activation reservoir connected with the settler having conduit. The stabilization chamber is equipped with a coarse bubble aerator and an overflow pipe line for discharge of excessive water and sludge to the equalizing reservoir. The settler is provided with a coarse bubble aerator for dilution of a biological film.

Patent US6120687 relates to modular wastewater treatment apparatus for treating wastewater while reducing the amount of sludge produced per unit of wastewater treated. It has a vessel, in which an inlet communicates wastewater, grit, and suspended solids into a grit collecting chamber. An aeration zone receives air for facilitating biological digestion of the suspended solids and conversion to activated sludge. The activated sludge communicates through an conduit to a mixing chamber which also receives wastewater with suspended solids from the grit collecting chamber. The air creates an upflow of wastewater and activated sludge to secondary clarifiers having sludge receiving plates on which the sludge settles, accumulates, and falls from, resulting in treated water in the upper portions of the secondary clarifier.

Patent US3713543 relates to sewage treatment plants. This is accomplished through the use of an "in-depth" filter, through which the effluent liquid from the settling tank flows to the clearwell in which it is collected and chlorinated. Using two of these filters, alternating from one to the other, the sewage plant can operate continuously, one being used while the other is being backwashed and made ready for use. Backwash water is collected in a backwash well or compartment and returned to the initial contact zone at a metered rate, avoiding the sudden dumping of a volume of backwash water into the plant.

A unit for household sewage biological treatment is known from RU45380 which comprises process chambers, including an equalizing chamber and an activation chamber, level gauges, an aeration system for direct and reverse treatment modes, having at least two compressors connected to conduits and aerators arranged in the process chambers, which is connected to a control unit capable of switching between the direct treatment mode and the reverse treatment mode, wherein the unit is also provided with an emergency discharge system composed of an emergency level gauges installed in the equalizing chamber and an emergency discharge conduits connected to an emergency conduit. Furthermore, the unit is provided with a secondary settling tank and a sludge stabilization chamber.

This conventional unit is taken as the closest prior art.

Its disadvantages include insufficient quality of treatment, a complex and expensive control system and a complicated design of the unit itself.

A technical objective of the proposed invention is to develop and provide a unit for integrated waste water biological treatment, which is simple in operation and has a compact design, high reliability, long service life, and is environmentally safe.

A technical effect achieved is high quality of biological treatment of any volumes of waste water supplied to the unit, especially in case of so-called volleys having peak volumes.

The stated technical objective is achieved due to the fact that the proposed unit is a reservoir comprising a housing, a waste water receiving chamber, an aerotank chamber, a secondary settling tank with discharge of treated water and an activated sludge separating chamber, which are all arranged in said housing, the receiving chamber includes a primary filter and a means for blowing it off, float-type level gauges and a conduit for transferring waste water, a conduit for transferring a grease film into the aerotank chamber, wherein the receiving chamber, the aerotank chamber and the activated sludge separating chamber are provided with aerators air to which as well as to conduits arranged in the receiving chamber, the aerotank chamber and the secondary settling tank is supplied from at least two compressors, the activated sludge separating chamber is provided with an intermediate partition forming an additional chamber for separating sludge, this partition being composed of two parts, the upper one and the lower one, which are arranged so as to form free space between them, wherein the upper part is arranged obliquely and the lower part is arranged vertically, and a conduit for transferring volleys is arranged in the receiving chamber.

The proposed invention is shown in the enclosed drawings where:
Fig. 1 is a plan view of the unit;

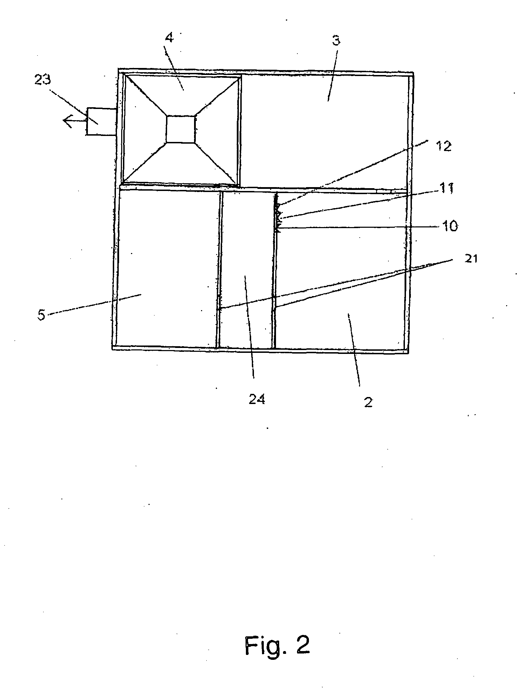

Fig. 2 is a plan view of the unit, showing some of the chambers;
Fig. 3 schematically shows the intermediate partition arranged in the activated sludge separating chamber.

The unit for integrated waste water treatment comprises a reservoir 1 having a rectangular housing provided with stiffening ribs (not shown in the drawings). The housing walls are made of foamed polypropylene.

The housing is subdivided into a number of chambers, namely: receiving chamber 2 with waste water supply where primary treatment for removing of large fractions is carried out; aerotank chamber 3 being the main treatment chamber where intensive oxidation of waste water without large fractions and slight oxidation by activated sludge takes place; secondary settling tank 4 where working activated sludge is separated from pure water; and activated sludge separating chamber 5 (the chamber where used activated sludge is accumulated).

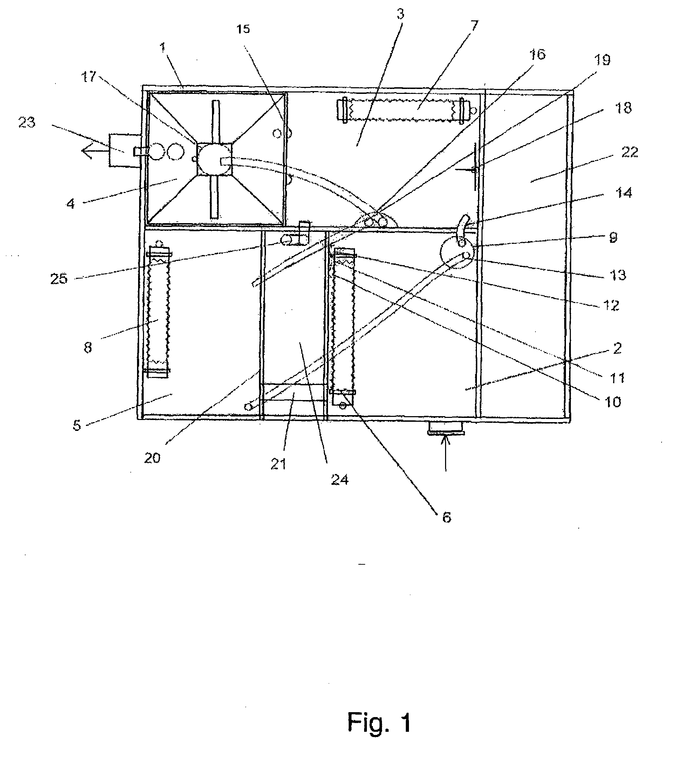

Aerator 6 and primary filter 9 as well as means (not shown in Fig. 1) for blowing the filter off are arranged in the receiving chamber 2. The receiving chamber 2 is also provided with float gauges 10, 11 for the work level and the emergency level, respectively, as well as float gauge 12 for a volley level. The receiving chamber 2 also has conduit 13 for transferring volleys and is communicated with the aerotank chamber 3 through conduit 14 for transferring waste water. The aerotank chamber 3 is provided with aerator 7 and fibrous material remover 18.

The unit also comprises aerator 8, conduits 15 for transferring grease films, conduits 19 for transferring sludge and circulation conduit 16, which are all arranged in the respective chambers and form, together with the aerators and the float gauges, two aeration subsystems (for the direct treatment mode and the reverse treatment mode), each of the subsystems is provided with a compressor. These devices are controlled by electric-pneumatic distribution cabinet 22.

The proposed invention can be operated as follows.

Waste water is fed as a gravity flow to the receiving chamber 2 where large fractions are broken down by intensive aeration. Here, the organic portion of waste water is separated from the non-organic portion and activated sludge slightly acts on waste water, solid and non-degradable particles settle into the chamber bottom part where passive sediment is formed in the result of contacting mineral sediment. Then small fractions go through the primary filter 9 and are transferred by the conduit 14 to the aerotank chamber 3.

The latter chamber is used for intensively acting by activated sludge on waste water and biologically treating it. Then, after treatment, a mixture of water and sludge is transferred to the secondary settling tank 4 where activated sludge is separated from water by gravity in the tranquil state and in non-aerated space of the stabilizing cylinder 17, sludge passes to the bottom part of the secondary settling tank, and water goes to the outlet tube 23 through an additional filter (not shown on the drawings).

At that time the grease film, which is formed in the secondary settling tank 4, is transferred by the conduit 15 back into the aerotank chamber 3. Activated sludge is transferred by the conduit from the bottom part of the unit to the activated sludge separating chamber 5, where the old (heavier) activated sludge is separated from the new (lighter) activated sludge. The new sludge flows into the receiving chamber and from there back into the aerotank chamber.

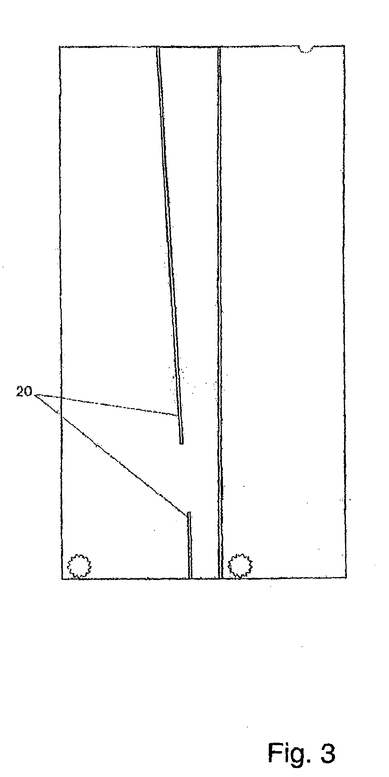

The activated sludge separating chamber is divided by intermediate partition 20 consisting of two, the upper one and the lower one, parts (Fig. 3) arranged so as to form free space between them, the upper part being arranged obliquely, and the lower part being arranged vertically. By using this partition additional chamber 24 is formed, which communicates through overflow device 21 (Fig. 1) with both the main chamber of the sludge separating chamber 5 and the receiving chamber 2; this additional chamber 24 constantly contains treated water in its upper part, and the presence of the partition enables to preclude washing activated sludge out of the chamber during the operation of the unit process equipment.

Thus, the unit continuous operation mode is ensured. Thanks to that waste water can be cleaned by 98%.

The spent (used) activated sludge is removed by the conduit once in three or four months.

At insufficient quantities of waste water, when its level in the receiving chamber 2 reaches a preset minimum, the float gauge 10 switches on the compressor of the reverse mode aeration subsystem and toggles the unit into the recycling mode (reverse mode). During operation in this mode, the receiving chamber 2 is aerated, and the sludge is transferred by the conduit 19 from the aerotank chamber 3 into the activated sludge separating chamber 5 where the activated sludge is separated into fractions, the most active lighter sludge is transferred together with the remaining water back into the receiving chamber 2, and the heavier sludge settles into the bottom part of the activated sludge separating chamber 5. After the level of liquid in the receiving chamber 2 reaches the work upper value, the float gauge 11 switches on the compressor of the direct mode aeration subsystem, and the unit starts working in the mode of liquid direct flow.

If volleys with peak values of waste water come to the unit, the float gauge 12 switches on the volley conduit 13, and simultaneously overflow conduit 25, which is arranged in the additional chamber 24 of the activated sludge stabilizer chamber 5, starts operating. Treated water from the upper part of the additional chamber 24 is transferred into the aerotank chamber 3 and from there into the secondary settling tank 4.

After treating any volleys the conduit 13 turns off, and the unit passes to the above-described recirculation mode.

Thus, during operating the unit activated sludge is removed automatically and its concentration is maintained at a level necessary for optimal treatment, including the case of overfilling the unit above the emergency level or the case of volleys.

## Claims

1. A unit for waste water biological treatment, which consists of a reservoir (1) having a housing which comprises:
a receiving chamber (2) with a waste water supply, an aerotank chamber (3) for an intensive oxidation of waste water, a secondary settling tank (4) for discharging of treated water and an activated sludge separating chamber (5) for separating old activated sludge from new activated sludge having an additional chamber (24);
wherein said receiving chamber (2) having a primary filter (9) and a means for blowing the primary filter (9) off, float gauges (10, 11, 12) for leveling of waste water, a peak volume conduit (13) for transferring peak volumes and a waste water conduit (14) for transferring waste water, and being communicated through said peak volume conduit (13) with said activated sludge separating chamber (5) and being communicated through said waste water conduit (14) with said aerotank chamber (3);
a conduit (15) for transferring a grease film into said aerotank chamber (3) being arranged in said secondary settling tank (4), a conduit (19) for transferring sludge from said aerotank chamber (3) to said activated sludge separating chamber (5), a circulation conduit (16) for communicating said aerotank chamber (3) with said secondary settling tank (4) and an overflow conduit (25) for communicating said additional chamber (24) and said aerotank chamber (3); and
an electric-pneumatic distribution cabinet (22) for controlling said conduits (13, 14, 15, 16, 19, 25);
wherein said receiving chamber (2), said aerotank chamber (3) and said activated sludge separating chamber (5) being all provided with aerators (6, 7, 8), wherein air to said aerators (6, 7, 8) as well as to said conduits (13, 14, 15, 16, 19) arranged in said receiving chamber (2), said aerotank chamber (3) and said secondary settling tank (4) is supplied from at least two compressors;
wherein said activated sludge separating chamber (5) being provided with a partition (20) forming said additional chamber (24) for stabilizing sludge; and
wherein said partition (20) being composed of two parts, the upper one and the lower one, which are arranged so as to form free space between them, wherein the upper part is arranged obliquely and the lower part is arranged vertically.

2. The unit according to Claim 1, **characterized in that** the housing of the reservoir (1) is provided with stiffening ribs.

3. The unit according to Claim 1, **characterized in that** the reservoir (1) is made rectangular in its cross-section.

4. The unit according to Claim 1, **characterized in that** the housing of the reservoir (1) is made of polypropylene.

## Patentansprüche

1. Anlage zur biologischen Abwasserbehandlung, die aus einem Reservoir (1) besteht, das ein Gehäuse aufweist, das Folgendes umfasst:
eine Aufnahmekammer (2) mit einer Abwasserzufuhr, eine Lüftungstankkammer (3) für eine intensive Oxidation von Abwasser, einen sekundären Absetztank (4) zum Ablassen von behandeltem Wasser und eine Aktivschlamm-Trennkammer (5) zum Trennen von altem Aktivschlamm von neuem Aktivschlamm mit einer zusätzlichen Kammer (24);
wobei die Aufnahmekammer (2) Folgendes aufweist: einen Primärfilter (9) und ein Mittel zum Abblasen des Primärfilters (9), Messschwimmer (10, 11, 12) zum Nivellieren von Abwasser, eine Spitzenvolumenleitung (13) zum Transferieren von Spitzenvolumen und eine Abwasserleitung (14) zum Transferieren von Abwasser, und
die über die Spitzenvolumenleitung (13) mit der Aktivschlamm-Trennkammer (5) kommuniziert und die über die Abwasserleitung (14) mit der Lüftungstankkammer (3) kommuniziert;
eine Leitung (15) zum Transferieren eines Fettfilms in die Lüftungstankkammer (3), die in dem sekundären Absetztank (4) angeordnet ist, eine Leitung (19) zum Transferieren von Schlamm aus der Lüftungstankkammer (3) in die Aktivschlamm-Trennkammer (5), eine Zirkulationsleitung (16) zum Verbinden der Lüftungstankkammer (3) mit dem sekundären Absetztank (4) und eine Überlaufleitung (25) zum Verbinden der zusätzlichen Kammer (24) mit der Lüftungstankkammer (3); und
einen elektropneumatischen Verteilerschrank (22) zum Steuern der Leitungen (13, 14, 15, 16, 19, 25);
wobei die Aufnahmekammer (2), die Lüftungstankkammer (3) und die Aktivschlamm-Trennkammer (5) allesamt mit Lüftungsvorrichtungen (6, 7, 8) versehen sind, wobei Luft zu den Lüftungsvorrichtungen (6, 7, 8) sowie zu den Leitungen (13, 14, 15, 16, 19), die in der Aufnahmekammer (2), der Lüftungstankkammer (3) und dem sekundären Absetztank (4) angeordnet sind, von mindestens zwei Kompressoren zugeführt wird;
wobei die Aktivschlamm-Trennkammer (5) mit einer Trennwand (20) versehen ist, welche die zusätzliche Kammer (24) zum Stabilisieren des Schlamms bildet; und
wobei die Trennwand (20) aus zwei Teilen besteht, dem oberen und dem unteren, die so angeordnet sind, dass sich ein freier Raum zwischen ihnen befindet, wobei der obere Teil schräg angeordnet ist und der untere Teil vertikal angeordnet ist.

2. Anlage nach Anspruch 1, **dadurch gekennzeichnet, dass** das Gehäuse des Reservoirs (1) mit Versteifungsrippen versehen ist.

3. Anlage nach Anspruch 1, **dadurch gekennzeichnet, dass** das Reservoir (1) einen rechteckigen Querschnitt aufweist.

4. Anlage nach Anspruch 1, **dadurch gekennzeichnet, dass** das Gehäuse des Reservoirs (1) aus Polypropylen besteht.

## Revendications

1. Unité pour le traitement biologique d'eaux usées, constituée d'un réservoir (1) ayant un carter qui comprend :
une chambre de réception (2) avec une amenée d'eaux usées,
une chambre de cuve d'aération (3) pour une oxydation intensive des eaux usées, une cuve de décantation secondaire (4) pour décharger les eaux traitées et une chambre de séparation des boues activées (5) pour séparer les anciennes boues activées des nouvelles boues activées ayant une chambre supplémentaire (24) ;
dans laquelle ladite chambre de réception (2) comporte un filtre primaire (9) et un moyen pour purger le filtre primaire (9), des jauges à flotteur (10, 11, 12) pour niveler les eaux usées, un conduit de volume de pointe (13) pour transférer les volumes de pointe et un conduit d'eaux usées (14) pour transférer les eaux usées, et
communiquant par le biais dudit conduit de volume de pointe (13) avec ladite chambre de séparation des boues activées (5) et communiquant par le biais dudit conduit d'eaux usées (14) avec ladite chambre de cuve d'aération (3) ;
un conduit (15) pour transférer un film gras dans ladite chambre de cuve d'aération (3) étant agencé dans ladite cuve de décantation secondaire (4), un conduit (19) pour transférer les boues de ladite chambre de cuve d'aération (3) vers ladite chambre de séparation des boues activées (5), un conduit de circulation (16) pour faire communiquer ladite chambre de cuve d'aération (3) avec ladite cuve de décantation secondaire (4) et un conduit de trop-plein (25) pour faire communiquer ladite chambre supplémentaire (24) et ladite chambre de cuve d'aération (3) ; et
une armoire de distribution électrique-pneumatique (22) pour commander lesdits conduits (13, 14, 15, 16, 19, 25) ;
dans laquelle ladite chambre de réception (2), ladite chambre de cuve d'aération (3) et ladite chambre de séparation des boues activées (5) sont toutes pourvues d'aérateurs (6, 7, 8), dans laquelle l'air se dirigeant vers ces aérateurs (6, 7, 8) ainsi que vers ces conduits (13, 14, 15, 16, 19) agencés dans ladite chambre de réception (2), ladite chambre de cuve d'aération (3) et la cuve de décantation secondaire (4) est fourni par au moins deux compresseurs ;
dans laquelle ladite chambre de séparation des boues activées (5) est pourvue d'une séparation (20) formant ladite chambre supplémentaire (24) pour stabiliser les boues ; et
dans laquelle ladite séparation (20) est composée de deux parties, la partie supérieure et la partie inférieure, qui sont agencées de manière à former un espace libre entre elles, dans laquelle la partie supérieure est agencée obliquement et la partie inférieure est agencée verticalement.

2. Unité selon la revendication 1, **caractérisée par le fait que** le carter du réservoir (1) est pourvu de nervures de rigidité.

3. Unité selon la revendication 1, **caractérisée par le fait que** le réservoir (1) est de forme rectangulaire dans sa section transversale.

4. Unité selon la revendication 1, **caractérisée par le fait que** le carter du réservoir (1) est constitué de polypropylène.
